(19)

Europäisches Patentamt
European Patent Office
Office européen des brevets

(11)  EP 4 571 916 A1

(12)  EUROPEAN PATENT APPLICATION
published in accordance with Art. 153(4) EPC

(43) Date of publication:
18.06.2025  Bulletin 2025/25

(21) Application number: 23853097.6

(22) Date of filing: 11.08.2023

(51) International Patent Classification (IPC):
H01M 10/0565 (2010.01)      H01M 10/42 (2006.01)
H01M 10/0585 (2010.01)      H01M 4/1391 (2010.01)
H01M 4/1393 (2010.01)       H01M 10/0525 (2010.01)
H01M 4/525 (2010.01)        H01M 4/505 (2010.01)

(52) Cooperative Patent Classification (CPC):
H01M 4/1391; H01M 4/1393; H01M 4/505;
H01M 4/525; H01M 10/0525; H01M 10/0565;
H01M 10/0585; H01M 10/42

(86) International application number:
PCT/KR2023/012002

(87) International publication number:
WO 2024/035232 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  12.08.2022  KR 20220101638

(71) Applicant: LG Energy Solution, Ltd.
Seoul 07335 (KR)

(72) Inventors:
• HWANG, Sun Wook
  Daejeon 34122 (KR)
• RYU, Ji Hoon
  Daejeon 34122 (KR)
• KIM, Dong Kyu
  Daejeon 34122 (KR)

(74) Representative: Goddar, Heinz J.
Boehmert & Boehmert
Anwaltspartnerschaft mbB
Pettenkoferstrasse 22
80336 München (DE)

(54) **SOLID ELECTROLYTE-ELECTRODE COMPOSITE, METHOD FOR MANUFACTURING SOLID ELECTROLYTE-ELECTRODE COMPOSITE, AND ALL-SOLID-STATE BATTERY COMPRISING SAME SOLID ELECTROLYTE-ELECTRODE COMPOSITE**

(57)    The present invention relates to a method for manufacturing a solid electrolyte-electrode composite, comprising: immersing an electrode in an electrolyte precursor composition comprising a photo-crosslinkable monomer comprising three or more acrylate groups, an initiator, a lithium salt and an organic solvent; photocuring the electrode immersed in the electrolyte precursor composition to form a polymer electrolyte membrane; and thermal curing the electrode at which the polymer electrolyte membrane is formed, a solid electrolyte-electrode composite, not showing a peak in a wave number region of 1,700 cm$^{-1}$ to 1,600 cm$^{-1}$ by Fourier Transform Infrared Spectroscopic analysis, and an all-solid battery comprising the solid electrolyte-electrode composite.

[FIG. 1]

EP 4 571 916 A1

**Description**

**TECHNICAL FIELD**

This application claims priority from Korean Patent Application Nos. 10-2022-0101638, filed on August 12, 2022, and 10-2023-0105636, filed on August 11, 2023, in the Korean Intellectual Property Office, the disclosures of which are incorporated herein.

The present invention relates to a solid electrolyte-electrode composite, a method for manufacturing the solid electrolyte-electrode composite and an all-solid battery comprising the solid electrolyte-electrode composite.

**BACKGROUND ART**

Lithium secondary batteries can be miniaturized and have high energy density and working voltage, and accordingly, are applied in various fields such as mobile devices, electronic products and electric vehicles. As the applications of lithium secondary batteries become more diverse, the required conditions of physical properties increase gradually, particularly, the development on lithium secondary batteries which are stably operated in diverse environments is being required.

Generally, secondary batteries are manufactured by installing an electrode assembly composed of a negative electrode, a positive electrode and a separator in a case having a certain space of a cylindrical, a prismatic, or a pouch type.

As the conventional electrolyte for electrochemical devices, a liquid type electrolyte in which a salt is dissolved in a non-aqueous organic solvent has been widely used. However, the liquid electrolyte induces the deterioration of an electrode material, has strong possibility of volatilizing an organic solvent, produces combustion or the like due to the elevation of the temperature, and has concerns on leakage, and there are difficulties in accomplishing electrochemical devices of diverse types, which require safety.

Accordingly, studies on an all-solid battery in which a solid electrolyte having high electrochemical stability in contrast to a liquid electrolyte, are being actively conducted. However, there are limitations in accomplishing complete curing to an electrolyte solution present in an electrode when performing curing for preparing a solid electrolyte.

**DISCLOSURE OF THE INVENTION**

**TECHNICAL PROBLEM**

The present invention is to solve the above-described defects and to provide a solid electrolyte-electrode composite in which complete curing is achieved, and an unreacted monomer is not detected.

In addition, there is provided a method for manufacturing a solid electrolyte-electrode composite having an increased curing degree of an electrolyte by performing both photocuring and thermal curing.

In addition, there is provided an all-solid battery comprising the solid electrolyte-electrode composite.

**TECHNICAL SOLUTION**

According to an embodiment, the present invention provides a solid electrolyte-electrode composite, which does not show a peak in a wavenumber region of 1,700 $cm^{-1}$ to 1,600 $cm^{-1}$ by Fourier-Transform Infrared Spectroscopic analysis.

In addition, the present invention provides a method for preparing a solid electrolyte-electrode composite, comprising: immersing an electrode in an electrolyte precursor composition comprising a photo-crosslinkable monomer comprising three or more acrylate groups, an initiator, a lithium salt and an organic solvent; photocuring the electrode immersed in the electrolyte precursor composition to form a polymer electrolyte membrane; and thermal curing the electrode at which the polymer electrolyte membrane is formed.

In addition, the present invention provides an all-solid battery comprising the solid electrolyte-electrode composite.

**ADVANTAGEOUS EFFECTS**

The solid electrolyte-electrode composite according to the present invention includes a rigid polymer electrolyte membrane in which complete polymerization is achieved without an unreacted monomer, and defects arising short due to the leakage of an electrolyte solution from an electrode may be prevented, and thus, the charge performance of a battery may be improved.

Meanwhile, the method for preparing the solid electrolyte-electrode composite according to the present invention uses a material including three or more acrylate groups to increase crosslinking density and achieve complete polymerization through photocuring and thermal curing, and accordingly, an electrolyte precursor solution may be completely cured without remaining the electrolyte precursor solution in the electrolyte as well as at the surface of the electrode, thereby showing excellent processability and safety.

Ultimately, there are advantages in the present invention of providing a battery having improved safety in diverse driving environment.

## BRIED DESCRIPTION OF DRAWINGS

FIG. 1 is a diagram showing the FTIR spectrums of solid electrolyte-electrode composites prepared in Example 1 and Comparative Example 1.

FIG. 2 is a diagram showing the FTIR spectrum of a solid electrolyte-electrode composite prepared in Comparative Example 2.

FIG. 3 is a diagram showing the configuration of an all-solid battery according to an exemplary embodiment of the present invention.

FIG. 4 is a diagram showing the charge and discharge profile of an all-solid battery manufactured according to Example 1.

FIG. 5 is a diagram showing the charge and discharge profiles of all-solid batteries manufactured according to Example 1 and Comparative Example 2.

[Explanation of Reference Numerals]

100: positive electrode
101: positive electrode current collector
102: positive electrode active material layer
103: solid electrolyte-positive electrode composite
200: negative electrode
201: negative electrode current collector
202: negative electrode active material layer
203: solid electrolyte-negative electrode composite
300, 300': solid electrolytes

## BEST MODE FOR CARRYING OUT THE INVENTION

Hereinafter, the present invention will be explained in more detail.

### [Solid Electrolyte-Electrode Composite]

First, the solid electrolyte-electrode composite of the present invention will be explained.

The solid electrolyte-electrode composite according to the present invention may not show a peak in a wavenumber region of 1,700 cm$^{-1}$ to 1,600 cm$^{-1}$ when conducting Fourier-Transform Infrared Spectroscopic (FTIR) analysis. The peak observed in the wavenumber region of 1,700 cm$^{-1}$ to 1,600 cm$^{-1}$ of FTIR spectrum is shown by C=C stretching vibration and means the remaining of unreacted monomers uncured in an electrode. However, the solid electrolyte-electrode composite according to the present invention is polymerized by 100% without remaining monomers, and there is no peak in the wavenumber region of 1,700 cm$^{-1}$ to 1,600 cm$^{-1}$.

Meanwhile, the phrase "a peak is not shown" means that "a peak is not observed on the spectrum by the naked eye", for example, the transmittance change per 10 cm$^{-1}$ wavenumber is less than 10%.

In this case, the solid electrolyte-electrode composite means a state of forming a crosslinking structure through the curing of an electrolyte precursor composition soaked into an electrode. In this case, a solid electrolyte may be a gel state or a completely solidified state.

In an embodiment of the present invention, the thickness of the solid electrolyte-electrode composite may be in a range of 60 μm to 200 μm, preferably, 80 μm to 200 μm, more preferably, 100 μm to 200 μm.

Meanwhile, in the solid electrolyte-electrode composite, the electrode may be a positive electrode or a negative electrode, and the thickness of the electrode may be 50 μm to 150 μm.

In addition, in the solid electrolyte-electrode composite, the solid electrolyte may play the role of a separator, but a separator may be further included between the positive electrode and the negative electrode as necessary.

Hereinafter, the positive electrode, the negative electrode and the separator will be explained in more detail.

(a) Positive Electrode

The positive electrode includes a positive electrode active material and may be manufactured by coating a positive electrode slurry including a positive electrode active material, a binder, a conductive agent and a solvent on a positive electrode current collector, drying and rolling.

The positive electrode current collector is not specifically limited as long as it does not induce the chemical change of a battery, and it is conductive, and for example, stainless steel, aluminum, nickel, titanium, baked carbon, or surface-treated aluminum or stainless steel with carbon, nickel, titanium, silver, or the like, may be used.

As the positive electrode active material, a lithium transition metal oxide may be used, and any one can be used as long as the intercalation and deintercalation of lithium ions during charge and discharge occur smooth, without limitation, and for example, one or more selected from the group consisting of a lithium nickel cobalt-based composite oxide, a lithium manganese-based composite oxide and a lithium iron phosphate-based composite oxide, preferably, a lithium nickel cobalt-based composite oxide, may be used.

Particularly, the lithium nickel cobalt-based composite oxide may have a composition of Formula 1.

[Formula 1] $\quad Li_{1+x}(Ni_aCo_bMn_cM_d)O_2$

In Formula 1,

M is one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo, and

$1+x$, a, b, c and d are each independently molar ratios of elements, where

$-0.2 \leq x \leq 0.2$, $0.60 \leq a < 1$, $0 < b \leq 0.30$, $0 < c \leq 0.30$, $0 \leq d \leq 0.10$, and $a+b+c+d = 1$.

The "$1+x$" is a lithium molar ratio in the lithium nickel cobalt-based composite oxide, and $-0.1 \leq x \leq 0.2$, or $0 \leq x \leq 0.2$ may be satisfied. If the lithium molar ratio satisfies the above range, the crystal structure of the lithium nickel cobalt-based composite oxide may be formed stably.

The "a" is the nickel molar ratio in the entire metal excluding lithium in the lithium nickel cobalt-based composite oxide, and $0.70 \leq a < 1$, $0.75 \leq a < 1$, or $0.80 \leq a < 1$ may be satisfied. If the nickel molar ratio satisfies the range, high energy density may be shown, and high capacity may be accomplished.

The "b" is the cobalt molar ratio in the entire metal excluding lithium in the lithium nickel cobalt-based composite oxide, and $0 < b \leq 0.20$, $0 < b \leq 0.15$, or $0 < b \leq 0.10$ may be satisfied. If the cobalt molar ratio satisfies the range, excellent resistance properties and output properties may be accomplished.

The "c" is the manganese molar ratio in the entire metal excluding lithium in the lithium nickel cobalt-based composite oxide, and $0 < c \leq 0.20$, $0 < c \leq 0.15$, or $0 < c \leq 0.10$ may be satisfied. If the manganese molar ratio satisfies the range, the structural stability of a positive electrode active material may be excellent.

In an embodiment of the present invention, the lithium nickel cobalt-based composite oxide may include one or more doping elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo, preferably, Al as a doping element. In other words, the "d" representing the molar ratio of the doping element in the entire metal excluding lithium in the lithium nickel cobalt-based composite oxide, and $0 < d \leq 0.10$, $0 < d \leq 0.08$, or $0 < d \leq 0.05$ may be satisfied.

Preferably, "a", "b", "c" and "d" may satisfy $0.70 \leq a < 1$, $0 < b \leq 0.2$, $0 < c \leq 0.2$, $0 \leq d \leq 0.1$, respectively.

The lithium manganese-based composite oxide may be one or more selected from the group consisting of $Li_pMn_{1-q}M^a_qA_2$, $Li_pMn_2O_{4-r}X_r$, $Li_pMn_{2-q}M^a_qM^b_rA_4$, $Li_pCo_{1-q}M^a_qA_2$, $Li_pCo_{1-q}M^a_qO_{2-r}X_r$, $Li_pNi_{1-q}M^a_qO_{2-r}X_r$, $Li_pNi_{1-q}Co_qO_{2-r}X_r$, $Li_pNi_{1-q-r}CO_qM^a_rA_w$, $Li_pNi_{1-q-r}Co_qM^a_rO_{2-w}X_w$, $Li_pNi_{1-q-r}Mn_qM^a_rA_w$ and $Li_pNi_{1-q-r}Mn_qM^a_rO_{2-w}X_w$, and in this case, p, q, r and w satisfy $0.9 \leq p \leq 1.2$, $0 \leq q \leq 1$, $0 \leq r \leq 1$, and $0 \leq w \leq 2$, respectively, $M^a$ and $M^b$ are the same or different and one or more elements selected from the group consisting of Mg, Al, Co, K, Na, Ca, Si, Ti, Sn, V, Ge, Ga, B, As, Zr, Mn, Cr, Fe, Sr, V, and rare earth elements, A is one or more elements selected from the group consisting of O, F, S and P, and X is one or more elements selected from the group consisting of F, S and P.

The lithium iron phosphate-based composite oxide may be represented by Formula 2.

[Formula 2] $\quad LiFe_{1-k}M^c_kPO_4$

In Formula 2,

$M^c$ is one or more selected from Ni, Co, Mn, Al, Mg, Y, Zn, In, Ru, Sn, Sb, Ti, Te, Nb, Mo, Cr, Zr, W, Ir and V, and

$$0 \leq k < 1.$$

Meanwhile, the positive electrode active material may be included in 80 wt% to 99 wt%, particularly, 90 wt% to 99 wt% based on the total weight of the solid content in a positive electrode slurry. In this case, if the amount of the positive electrode active material is less than 80 wt%, energy density may decrease, and capacity may be reduced.

The binder is a component assisting the bonding of an active material with a conductive agent and with a current collector, and may generally be added in an amount of 1 wt% to 30 wt% based on the total weight of the solid content in the positive electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber or diverse copolymers thereof.

In addition, the conductive agent is a material not inducing the chemical change of a battery but imparting conductivity, and may be added in 0.5 wt% to 20 wt% based on the total weight of the solid content of the positive electrode slurry.

The conductive agent may be selected from: carbon black such as acetylene black, Ketjen black, channel black, furnace black, lamp black, and thermal black; graphite powder such as natural graphite, artificial graphite, carbon nanotubes and graphite; conductive fibers such as carbon fibers and metal fibers; conductive powder such as fluorocarbon powder, aluminum powder and nickel powder; conductive whiskers such as zinc oxide whiskers and potassium titanate whiskers; conductive metal oxide such as titanium oxide; and conductive material such as polyphenylene derivatives.

In addition, the solvent of the positive electrode slurry may include an organic solvent such as N-methyl-2-pyrrolidone (NMP), and may be used in an amount to achieve a preferable viscosity with the positive electrode active material, the binder and the conductive agent. For example, the solvent may be included such that the concentration of the solid content in the positive electrode slurry including the positive electrode active material, the binder and the conductive agent may be 40 wt% to 90 wt%, preferably, 50 wt% to 80 wt%.

(b) Negative Electrode

The negative electrode according to the present invention includes a negative electrode active material, and may be manufactured by coating a negative electrode slurry including a negative electrode active material, a binder, a conductive agent and a solvent on a negative electrode current collector, drying and rolling.

The negative electrode current collector is not specifically limited as long as it does not induce the chemical change of a battery, and it is highly conductive, and for example, copper, stainless steel, aluminum, nickel, titanium, baked carbon, surface-treated copper or stainless steel with carbon, nickel, titanium, silver, or the like, or an aluminum-cadmium alloy, may be used. In addition, like the positive electrode current collector, the bonding force of the negative electrode active material may be reinforced by forming minute embossing at the surface thereof, and various shapes including a film, a sheet, a foil, a net, a porous body, a foamed body, a non-woven fabric, or the like may be used.

In addition, the negative electrode active material may use one or more selected from: a carbon-based material which can reversibly intercalate/deintercalated lithium ions; a metal or an alloy of the metal with lithium; a metal composite oxide; a material which can dope or dedope lithium; a lithium metal; and a transition metal oxide, preferably, a carbon-based material.

As the carbon-based material which can reversibly intercalate/deintercalated lithium ions, carbon-based negative electrode active materials commonly used in lithium ion secondary batteries may be used without specific limitation, typically, crystalline carbon, amorphous carbon or both of them. Examples of the crystalline carbon may include graphite including natural graphite or synthetic graphite of an amorphous, flat, flake, spherical or fibrous type, and examples of amorphous carbon may include soft carbon (baked carbon at a low temperature), hard carbon, mesophase pitch carbide, baked cokes, or the like.

The metal or the alloy of the metal and lithium may use a metal selected from the group consisting of Cu, Ni, Na, K, Rb, Cs, Fr, Be, Mg, Ca, Sr, Si, Sb, Pb, In, Zn, Ba, Ra, Ge, Al and Sn, or an alloy of the metal and lithium.

The metal composite oxide may use one or more selected from the group consisting of: PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$) and $Sn_xMe_{1-x}Me'_yO_z$ (Me: Mn, Fe, Pb, Ge; Me': Al, B, P, Si, elements in group 1, group 2 and group 3 in the periodic table, halogen; $0 < x \leq 1$; $1 \leq y \leq 3$; and $1 \leq z \leq 8$).

As the material which can dope or dedope lithium, Si, $SiO_x$ ($0 < x \leq 2$), an Si-Y alloy (Y is an element selected from the group consisting of an alkali metal, an alkaline earth metal, an element in group 13, an element in group 14, a transition metal, a rare earth element and combinations thereof, where Si is excluded), Sn, $SnO_2$, Sn-Y (Y is an element selected from the group consisting of an alkali metal, an alkaline earth metal, an element in group 13, an element in group 14, a transition metal, a rare earth element and combinations thereof, where Sn is excluded), or the like may be used, and a mixture of at least one thereof with $SiO_2$ may also be used. Element Y may be selected from the group consisting of Mg, Ca, Sr, Ba, Ra, Sc, Y, Ti, Zr, Hf, Rf, V, Nb, Ta, Db(dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

Examples of the transition metal oxide may include lithium-containing titanium composite oxide (LTO), vanadium oxide, lithium vanadium oxide, or the like.

The negative electrode active material may be included in 80 wt% to 99 wt% based on the total weight of the solid content of the negative electrode slurry.

The binder is a component assisting the bonding among the conductive agent, the active material and the current collector, and may generally be added in 1 wt% to 30 wt% based on the total weight of the solid content of the negative electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a styrene-butadiene rubber, a fluoro rubber, and diverse copolymers thereof.

The conductive agent is a component to improve the conductivity of the negative electrode active material even further and may be added in 0.5 wt% to 20 wt% based on the total weight of the solid content of the negative electrode slurry. The conductive agent is not specifically limited as long as it does not induce the chemical change of a battery, and is conductive. For example, carbon black such as acetylene black, Ketjen black, channel black, furnace black, lamp black, and thermal black; graphite powder such as natural graphite, artificial graphite, carbon nanotubes and graphite, having very developed crystal structure; conductive fibers such as carbon fibers and metal fibers; conductive powder such as fluorocarbon powder, aluminum powder and nickel powder; conductive whiskers such as zinc oxide whiskers and potassium titanate whiskers; conductive metal oxide such as titanium oxide; and conductive material such as polyphenylene derivatives, may be used.

The solvent of the negative electrode slurry may include water or an organic solvent such as NMP and alcohols, and may be used in an amount to achieve a preferable viscosity with the negative electrode active material, the binder and the conductive agent. For example, the solvent may be included such that the solid content in the negative electrode slurry including the negative electrode active material, the binder and the conductive agent may become 30 wt% to 80 wt%, preferably, 40 wt% to 70 wt%.

(c) Separator

The separator separates the negative electrode and the positive electrode and provides a movement passage of lithium ions, and separators commonly used in lithium secondary batteries may be used without specific limitation.

Particularly, as the separator, a porous polymer film, for example: a porous polymer film formed from a polyolefin-based polymer such as an ethylene homopolymer, a propylene homopolymer, an ethylene/butene copolymer, an ethylene/hexene copolymer and an ethylene/mathacrylate copolymer; or a stacked structure of two or more layers thereof, may be used. In addition, a commonly used porous non-woven fabric, for example, a non-woven fabric of a glass fiber having a high melting point, a polyethylene terephthalate fiber, or the like, may be used. In addition, in order to secure heat resistance and mechanical strength, a coated separator including a ceramic component or a polymer material may be used in a single layer or a multilayer structure.

Meanwhile, the solid electrolyte-electrode composite according to the present invention may be manufactured by, for example, a method for manufacturing a solid electrolyte-electrode composite, which will be explained later.

**[Method for Manufacturing Solid Electrolyte-Electrode Composite]**

Then, a method for manufacturing the solid electrolyte-electrode composite according to the present invention will be explained.

When manufacturing a solid electrolyte-electrode composite, after applying an electrolyte precursor solution on an electrode, a curing process is carried out for crosslinking and polymerizing a monomer included in the electrolyte precursor solution. In this case, generally, photocuring is performed through UV irradiation, and the curing through UV is easily achieved at the surface of the electrode, but the complete penetration of UV into the electrode is difficult. Accordingly, the electrolyte precursor solution remaining in the electrode may leak out during the processing, and there is possibility that the process itself is impossible.

Even the curing process is performed through thermal curing, the electrolyte may vaporize due to heat, and it is difficult to form a polymer electrolyte membrane in a film shape at the surface of the electrode, undesirably.

Accordingly, the inventors of the present application introduces a method of applying photocuring after applying an electrolyte on an electrode to form a polymerized electrolyte membrane on the surface of the electrode, and then applying thermal curing. Since, the polymerized electrolyte membrane is present at the surface, the vaporization or leakage of uncured electrolyte precursor solution during subsequent thermal curing may be prevented. Through this, unreacted monomer may not remain and completely polymerized at the surface of the electrode to the inside of the electrode, and the efficiency and stability of processes may be improved, and an all-solid battery having excellent safety may be provided even under inferior driving environments.

Hereinafter, each step will be explained in more detail.

## 1) Step of Immersing Electrode in Electrolyte Precursor Composition

The method for manufacturing the solid electrolyte-electrode composite according to an embodiment of the present invention includes a step of immersing an electrode in an electrolyte precursor solution. For example, a process of applying 10 µl to 100 µl, preferably, 20 µl to 80 µl, more preferably, 30 µl to 70 µl of an electrolyte precursor composition per cm$^2$ on the surface of the electrode through blade coating, and immersing for 10 seconds to 60 seconds in a vacuum state, may be carried out. If the amount of the electrolyte precursor composition is in the range, a polymer electrolyte membrane may be easily formed by UV curing.

In an embodiment of the present invention, the electrolyte precursor composition includes a photo-crosslinkable monomer, an initiator, a lithium salt and an organic solvent. Hereinafter, the configuration of the electrolyte precursor composition will be explained in more detail.

### (a) Photo-Crosslinkable Monomer

The photo-crosslinkable monomer is required to be photo-crosslinkable and thermal-crosslinkable, and include three or more acrylate groups, for example, one or more selected from the group consisting of ethoxylated trimethylolpropane triacrylate (ETPTA), trimethylolpropane ethoxytriacrylate, dipentaerythritolpentaacrylate, dipentaerythritolhexaacrylate and tris(2-hydroxyethyl)isocyanuratetriacrylate, preferably, ethoxylated trimethylolpropane triacrylate (ETPTA).

Since the photo-crosslinkable monomer includes three or more acrylate groups, crosslinking density is high due to photo-crosslinking and thermal-crosslinking. Accordingly, if the manufacturing method of the present invention is applied, there are advantages in that the degree of polymerization is markedly high in contrast to a photo-crosslinkable monomer in a long chain type such as polypropylene glycol diacrylate, which is used for maximizing the function as a liquid electrolyte mainly by maximally reducing the degree of curing.

The amount of the photo-crosslinkable monomer may be in a range of 1 wt% to 30 wt%, preferably, 5 wt% to 30 wt%, more preferably, 5 wt% to 25wt% based on the total weight of the electrolyte precursor composition. For the formation of a polymer crosslinking structure, the amount of the photo-crosslinkable monomer may preferably be 1 wt% or more, and for maintaining the ionic conductivity of the electrolyte to a certain degree or more, the amount may preferably be 30 wt% or less.

### (b) Initiator

The initiator may include a photoinitiator and a thermal initiator, or a photo and thermal dual-responsive initiator.

The photoinitiator may be a compound that may form radicals by light such as ultraviolet, without specific limitation, and may be, for example, one or more selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2 phenyl-acetoxy-ethoxy]-ethyl ester, oxy-phenyl-acetic acid 2-[2-hydroxyethoxy]-ethyl ester, alpha-dimethoxy-alpha-phenylacetophenone, 2-benzyl-2-(dimethylamino)-1-[4-(4-morpholinyl) phenyl]-1-butanone, 2-methyl-1-[4-(methylthio)phenyl]-2-(4-morpholinyl)-1-propanone, diphenyl (2,4,6-trimethylbenzoyl)-phosphine oxide, bis(2,4,6-trimethyl benzoyl)-phenyl phosphine oxide, bis(eta 5-2,4-cyclopentadien-1-yl), bis [2,6-difluoro-3-(1H-pyrrol-1-yl)phenyl]titanium, 4-isobutylphenyl-4'-methylphenyliodonium, hexafluorophosphate, and methyl benzoylformate, preferably, 2-hydroxy-2-methylpropiophenone (HMPP).

The thermal initiator may be a compound that may form radicals by heat, without specific limitation, and may be, for example, one or more selected from the group consisting of benzoyl peroxide, acetyl peroxide, dilauryl peroxide, di-tert-butyl peroxide, t-butyl peroxy-2-ethyl-hexanoate, cumyl hydroperoxide, hydrogen peroxide, 2,2'-azobis(2-cyanobutane), 2,2'-azobis(methylbutyronitrile), 2,2'-azobis(isobutyronitrile) (AIBN) and 2,2'-azobisdimethyl-valeronitrile (AMVN), preferably, AIBN.

The photo and thermal dual-responsive initiator may be a compound that may form radicals by light and heat, without specific limitation.

The total amount of the initiator may be 0.2 wt% to 5 wt%, preferably, 0.2 wt% to 2 wt%, more preferably, 0.5 wt% to 1.5 wt% based on the total weight of the monomer in the electrolyte precursor composition. Within the range, sufficient curing may be achieved, and an excessive amount of the initiator may not remain.

(c) Lithium Salt

The lithium salt may use commonly used ones as an electrolyte for lithium secondary batteries, without limitation, and particularly, the lithium salt may include $Li^+$ as a cation, and one or more anions selected from $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $BF_2C_2O_4CHF^-$, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$.

Particularly, the lithium salt may be one or more selected from the group consisting of $LiPF_6$, $LiClO_4$, $LiBF_4$, lithium bis (fluorosulfonyl) imide ($LiN(FSO_2)_2$; LiFSI), lithium bis(trifluoromethanesulfonyl)imide (LiTFSI), lithium bis(pentafluoroethanesulfonyl)imide (LiBETI), lithium trifluoromethanesulfonate ($LiSO_3CF_3$), lithium difluorophosphate ($LiPO_2F_2$), lithium bis (oxalato)borate (LiBOB), lithium difluoro(oxalato)borate (LiFOB), lithiumdifluoro(bisoxalato)phosphate (LiDFOP), lithiumtetrafluoro(oxalato)phosphate (LiTFOP), and lithiumfluoromalonato(difluoro)borate(LiFMDFB), preferably, one or more selected from the group consisting of $LiPF_6$, $LiClO_4$ $LiBF_4$, LiFSI and LiTFSI.

In an embodiment of the present invention, the concentration of the lithium salt in the electrolyte precursor composition may be 0.5 M to 4.0 M, preferably, 0.8 M to 2.0 M.

In view of improving the ionic conductivity, the concentration of the lithium salt may preferably be 0.5 M or more, but if the concentration is greater than 4.0 M, the salt may inhibit the polymerization of the photo-crosslinkable monomer.

(d) Organic Solvent

As the organic solvent of the electrolyte precursor composition, one or more selected from the group consisting of ethylene carbonate (EC), propylene carbonate (PC), fluorinated ethylene carbonate (FEC), diethyl carbonate (DEC), G-butyrolactone (GBL), sulfolane (SL), and succinonitrile (SN), may be used. Since the present invention includes a thermal curing step, the organic solvent is required to have a boiling point greater than the temperature for carrying out the thermal curing. For example, if the thermal curing is carried out at 80°C, the boiling point of the organic solvent may be greater than 80°C.

Other constituent components excluding the organic solvent among the total weight of the electrolyte precursor composition, for example, the residue excluding the amounts of the photo-crosslinkable monomer, the initiator, the lithium salt and additives, may be all the organic solvent, unless otherwise referred to.

The electrolyte precursor composition according to the present invention may further include one or more additives selected from the group consisting of a cyclic carbonate-based compound, a sultone-based compound, a sulfate-based compound, a phosphor-based compound, a nitrile-based compound, an amine-based compound, a silane-based compound, a benzene-based compound, and a lithium salt-based compound.

The cyclic carbonate-based compound may be one or more selected from the group consisting of vinylene carbonate (VC), vinyl ethylene carbonate (VEC) and fluoroethylene carbonate (FEC), particularly, vinylene carbonate.

The sultone-based compound may be a material forming a stable SEI membrane by a reduction reaction at the surface of a negative electrode, and may be one or more selected from the group consisting of 1,3-propane sultone (PS), 1,4-butane sultone, ethene sultone, prop-1-en-1,3-sultone (PRS), 1,4-butene sultone and 1-methyl-1,3-propene sultone, particularly, 1,3-propane sultone (PS) or prop-1-en-1,3-sultone (PRS).

The sulfate-based compound may be a material forming a stable SEI membrane which may not be electrically decomposed at the surface of the negative electrode to make cracks even stored at a high temperature, and may be one or more selected from the group consisting of ethylene sulfate (Esa), trimethylene sulfate (TMS), and methyl trimethylene sulfate (MTMS).

The phosphor-based compound may be a phosphate-based or a phosphite-based compound, particularly, one or more selected from the group consisting of tris(trimethyl silyl)phosphate, tris(trimethyl silyl)phosphite, tris(2,2,2-trifluoroethyl)phosphate and tris(trifluoroethyl)phosphite.

The nitrile-based compound may be one or more selected from the group consisting of succinonitrile (SN), adiponitrile (ADN), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl) ether (ASA3), 1,3,5-hexane tricarbonitrile (HTCN), 1,4-dicyano 2-butene (DCB) and 1,2,3-tris(2-cyanoethyl)propane (TCEP).

The amine-based compound may be one or more selected from the group consisting of triethanolamine and ethylenediamine, and the silane-based compound may be tetravinylsilane.

The benzene-based compound may be one or more selected from the group consisting of monofluorobenzene, difluorobenzene, trifluorobenzene and tetrafluorobenzene.

The lithium salt-based compound is a compound different from the lithium salt included in the non-aqueous electrolyte, and may be one or more selected from the group consisting of lithium difluoro phosphate (LiDFP; $LiPO_2F_2$), lithium bisoxalatoborate (LiBOB; $LiB(C_2O_4)_2$), lithium tetrafluoroborate ($LiBF_4$), lithium tetraphenylborate, lithium difluoro-o(oxalato)borate (LiDFOB) and lithium difluoro(bisoxalato)phosphate (LiDFOP).

Preferably, the electrolyte precursor composition may further include one or more additives selected from the group consisting of vinylene carbonate (VC), 1,3-propane sultone (PS), and ethylene sulfate (Esa), and may be included in the electrolyte precursor composition in 0.5 wt% to 5 wt% based on the total weight of the electrolyte precursor composition.

Meanwhile, in an embodiment of the present invention, the electrolyte precursor composition may have a viscosity at 25°C of 20 cP or less, preferably, 10 cP to 20 cP, more preferably, 10 cP to 15 cP, and the viscosity may be achieved by controlling the amount of the lithium salt. If the viscosity of the precursor composition is 20 cP or less, the degree of immersion of the electrode in the electrolyte precursor composition may be suitably secured, and battery capacity expression may be favorable.

### 2) Step of Photocuring

The method for manufacturing the solid electrolyte-electrode composite according to an embodiment of the present invention includes a step of photocuring the electrode immersed in the electrolyte precursor composition to form a polymer electrolyte membrane, and particularly, the photocuring may be carried out by irradiating ultraviolet with an intensity of 20 mW/cm$^2$ to 200 mW/cm$^2$, preferably, 80 mW/cm$^2$ to 190 mW/cm$^2$, more preferably, 100 mW/cm$^2$ to 180 mW/cm$^2$, for 20 seconds to 120 seconds.

The photo-crosslinkable monomer may be crosslinked from each other by the irradiation of ultraviolet to form a polymer matrix which is a three-dimensional network structure, and accordingly, a polymer electrolyte membrane may be formed on the surface of the electrode.

After the step of photocuring, the thickness of the polymer electrolyte membrane may be 10 $\mu$m to 50 $\mu$m, preferably, 15 $\mu$m to 45 $\mu$m, more preferably, 20 $\mu$m to 40 $\mu$m. After performing a thermal curing step, the thickness of the polymer electrolyte membrane is not changed.

### 3) Step of Thermal Curing

The method for manufacturing the solid electrolyte-electrode composite according to an embodiment of the present invention includes a step of thermal curing the photocured electrode, particularly, storing the photocured electrode in an oven set to 60°C to 90°C, particularly, 60°C to 85°C, more particularly, 70°C to 80°C for 3 hours to 10 hours.

The electrolyte precursor composition not polymerized and remaining in the electrode after the photocuring may be completely polymerized by the thermal curing.

Meanwhile, the thickness of the electrode may be 50 $\mu$m to 150 $\mu$m. If only photocuring is carried out as in the conventional technique, ultraviolet was difficult to penetrate into an electrode having a thickness of 50 $\mu$m or more, and complete curing was difficult, but according to the present invention, since both photocuring and thermal curing are applied, complete curing, that is, 100% polymerization without remaining a monomer may be possible even with the thickness.

After the step of thermal curing, the thickness of the composite of the solid electrolyte and the electrode may be 60 $\mu$m to 200 $\mu$m, preferably, 80 $\mu$m to 200 $\mu$m, more preferably, 100 $\mu$m to 200 $\mu$m. The thickness may be measured using a thickness gauge.

### [All-Solid Battery]

Then, the all-solid battery according to the present invention will be explained.

The all-solid battery according to the present invention includes the solid electrolyte-electrode composite.

Particularly, the solid electrolyte-electrode composite includes one or more solid electrolyte-positive electrode composites and solid electrolyte-negative electrode composites each, and the solid electrolyte-positive electrode composites and the solid electrolyte-negative electrode composites may be alternately stacked.

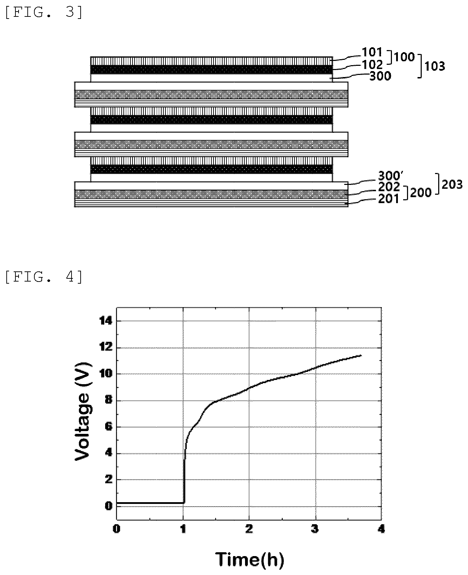

For example, as in FIG. 3, the all-solid battery may be a bipolar cell in which multiple solid electrolyte-positive electrode composites and solid electrolyte-negative electrode composites are alternately stacked. The solid electrolyte-positive electrode composite 103 is a composited one of a positive electrode 100 including a positive electrode current collector 101 and a positive electrode active material layer 102, formed on the positive electrode current collector, with a solid electrolyte 300. Meanwhile, the solid electrolyte-negative electrode composite 203 is a composited one of a negative electrode 200 including a negative electrode current collector 201 and a negative electrode active material layer 202, formed on the negative electrode current collector, with a solid electrolyte 300'. In this case, the "composite" and "composited" mean a state in which the electrode is immersed in the electrolyte precursor composition, and undergone photocuring and thermal curing to induce the polymerization of the electrolyte at the inside and on surface of the electrode.

The solid electrolyte-electrode composite according to the present invention is a completely cured state as described above, and there are advantages of accomplishing the bipolar cell.

Meanwhile, the all-solid battery may be manufactured by, for example, a method of forming the solid electrolyte-electrode composite according to the above-described preparation method and then, stacking a counter electrode. Particularly, the all-solid battery may be manufactured by stacking the composite of a solid electrolyte and a positive electrode with a negative electrode, by stacking the composite of a solid electrolyte and a negative electrode with a positive electrode, or by stacking the composite of a solid electrolyte and a positive electrode with the composite of a solid electrolyte and a negative electrode.

The all-solid battery manufactured according to the present invention may be used as a unit cell in a medium- and large-size battery module including multiple battery cells as well as in a battery cell used as a power source in a small-sized device.

Hereinafter, the present invention will be explained in particular through particular examples.

## MODE FOR CARRYING OUT THE INVENTION

## <Examples>

### Example 1.

(1) Preparation of Electrolyte Precursor Composition

To a mixture solvent of ethylene carbonate (EC) and propylene carbonate (PC) in a weight ratio of 5:5, $LiPF_6$, 10 wt% of ETPTA, 0.5 wt% of AIBN and 0.5 wt% of HMPP were added and mixed to prepare an electrolyte precursor composition. In this case, $LiPF_6$ was controlled to achieve a concentration of 1 M. Then, the viscosity of the prepared composition was measured under conditions of a temperature of 25°C, a humidity of 50 RH% and a frequency of 30 Hz, using a Brookfield viscometer (DV-II+ PRO Viscometer, Brookfield Co.), and the result was 15 cP.

(2) Manufacture of Positive Electrode

To N-methyl-2-pyrrolidone (NMP), $Li(Ni_{0.8}Co_{0.1}Mn_{0.1})O_2$ as a positive electrode active material, a conductive agent (carbon black) and a binder (polyvinylidene fluoride) were added in a weight ratio of 97.5:1:1.5 to prepare a positive electrode slurry (solid content: 60 wt%). The positive electrode slurry was applied on an aluminum (Al) thin film, which was a positive electrode current collector with a thickness of 15 $\mu$m, and dried, and then, roll pressing was performed to form a positive electrode having a thickness of 100 $\mu$m.

(3) Manufacture of Negative Electrode

Graphite as a negative electrode active material, SBR-CMC as a binder and carbon black as a conductive agent were added in a weight ratio of 95:3.5:1.5 to water as a solvent, to prepare a negative electrode slurry (solid content: 60 wt%). The negative electrode slurry was applied on a copper (Cu) thin film, which is a negative electrode current collector having a thickness of 10 $\mu$m and dried, and then, roll pressing was performed to form a negative electrode having a thickness of 140 $\mu$m.

(4) Manufacture of Solid Electrolyte-Electrode Composite

On each of the positive electrode and the negative electrode, 50 $\mu$l per $cm^2$ of the electrolyte precursor composition was applied through doctor blading, and UV of 150 mW/$cm^2$ was irradiated for 30 seconds to carry out photocuring. Then, an electrode including a polymer electrode membrane of which surface was photocured, was moved into an oven and undergone thermal curing by storing at 80°C for 4 hours.

The thicknesses of the composites of the solid electrolytes and the electrodes completed were confirmed suing a thickness gauge, and the solid electrolyte-positive electrode was 130 $\mu$m, and the solid electrolyte-negative electrode composite was 170 $\mu$m.

**Comparative Example 1**

Polymer electrolytes were formed on the surfaces of a positive electrode and a negative electrode by the same process as in Example 1, except for not carrying out thermal curing in (4) of Example 1.

**Comparative Example 2**

Polymer electrolytes were formed on the surfaces of a positive electrode and a negative electrode by the same process as in Example 1, except for using polypropylene glycol diacrylate instead of ETPTA in (1) of Example 1.

**<Experimental Examples>**

**Experimental Example 1. Confirmation of Degree of Polymerization**

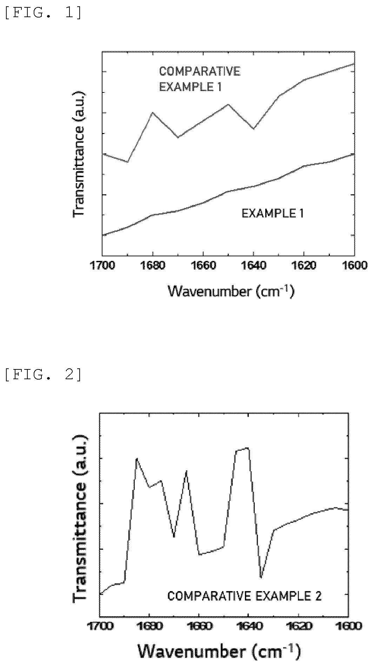

With respect to the solid electrolyte-positive electrode composites manufactured in Example 1, Comparative Example 1 and Comparative Example 2, FTIR spectrums as in FIG. 1 and FIG. 2 were obtained through FTIR analysis. FTIR analysis was conducted using Nicolet 6700 FTIR System and SMART Orbit ATR Accessory(ZnSe) of Thermo Fisher Scientic Co., with resolution conditions of 1 cm$^{-1}$ in a region of 1,700$^{-1}$ to 1,600cm$^{-1}$.

In FIG. 1, in Example 1, a sharp shape is shown without a peak in a wave number region of 1,700-1,600 cm$^{-1}$, but in Comparative Example 1, many peaks are observed. In addition, in FIG. 2, it can be confirmed that many peaks are also shown in Comparative Example 2. Through the results, it can be confirmed that uncured monomer remained in the electrodes of Comparative Examples 1 and 2, but uncured monomer did not remain in the electrode of Example 1.

**Experimental Example 2. Evaluation of Performance of All-Solid Battery**

By alternately stacking the solid electrolyte-positive electrode composite and the solid electrolyte-negative electrode composite manufactured in Example 1 three times, as in FIG. 3, a bipolar all-solid battery with three stacked unit cells was manufactured.

With respect to the all-solid battery manufactured, constant-current charge was conducted at 25°C with a current of 0.1 C until reaching 11.4 V. A charge-completed cell underwent a break time for about 60 seconds and the retaining of the voltage was confirmed. FIG. 4 is a diagram showing a voltage graph in accordance with time during charge and discharge, and through FIG. 4, about 11.4 V of full charge voltage was shown, and it can be confirmed that three unit cells having a degree of 3.8 V were normally connected in series.

The same bipolar all-solid battery was manufactured in Comparative Example 1, but the polymer electrolyte was incompletely cured, and the electrolyte leaked out from the electrode to arise short, and a normal bipolar all-solid battery could not be accomplished.

**Experimental Example 3. Evaluation of Performance of All-Solid Battery**

By stacking the solid electrolyte-positive electrode composite and the solid electrolyte-negative electrode composite manufactured in Example 1, a bipolar all-solid battery composed of one unit cell was manufactured.

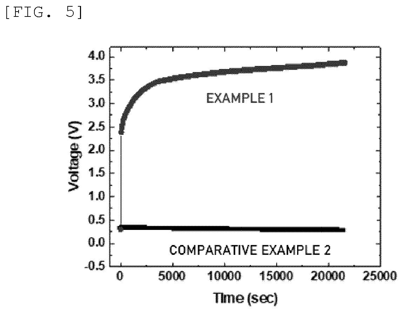

With respect to the all-solid battery manufactured, constant-current charge was conducted at 25°C with a current of 0.1 C until reaching 3.8 V. A charge-completed cell underwent a break time for about 60 seconds and the retaining of the voltage was confirmed. FIG. 5 is a diagram showing a voltage graph in accordance with time during charge and discharge, and through FIG. 5, it can be confirmed that normal charge was achieved until 3.8 V.

By the same method, a bipolar all-solid battery was manufactured using the solid electrolyte-positive electrode composite and the solid electrolyte-negative electrode composite manufactured in Comparative Example 2 and charged, but the complete curing of a polymer electrolyte was not achieved due to the use of a monomer having a long chain type, including less than three acrylate groups, and it can be confirmed that partial short of a positive electrode and a negative electrode occurred, and normal charge was not achieved.

**Claims**

1.  A solid electrolyte-electrode composite, not showing a peak in a wave number region of 1,700 cm$^{-1}$ to 1,600 cm$^{-1}$ by Fourier Transform Infrared Spectroscopic analysis.

2.  The solid electrolyte-electrode composite of claim 1, wherein a thickness of the solid electrolyte-electrode composite is in a range of 60 μm to 200 μm.

3. The solid electrolyte-electrode composite of claim 1, wherein

the electrode is a positive electrode comprising a positive electrode active material, and
the positive electrode active material comprises one or more selected from the group consisting of a lithium nickel cobalt-based composite oxide, a lithium manganese-based composite oxide and a lithium iron phosphate-based composite oxide.

4. The solid electrolyte-electrode composite of claim 3, wherein

the positive electrode active material comprises the lithium nickel cobalt-based composite oxide, and
the lithium nickel cobalt-based composite oxide has a composition of the following Formula 1:

[Formula 1] $Li_{1+x}(Ni_aCo_bMn_cM_d)O_2$

in Formula 1,

M is one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo, and
1+x, a, b, c and d are each independently molar ratios of elements, where
$-0.2 \leq x \leq 0.2$, $0.60 \leq a < 1$, $0 < b \leq 0.30$, $0 < c \leq 0.30$, $0 \leq d \leq 0.10$, and a+b+c+d = 1.

5. The solid electrolyte-electrode composite of claim 1, wherein

the electrode is a negative electrode comprising a negative electrode active material, and
the negative electrode active material is a carbon-based material.

6. A method for manufacturing a solid electrolyte-electrode composite, comprising:

immersing an electrode in an electrolyte precursor composition comprising a photo-crosslinkable monomer comprising three or more acrylate groups, an initiator, a lithium salt and an organic solvent;
photocuring the electrode immersed in the electrolyte precursor composition to form a polymer electrolyte membrane; and
thermal curing the electrode at which the polymer electrolyte membrane is formed.

7. The method of claim 6, wherein the photo-crosslinkable monomer is one or more selected from the group consisting of ethoxylated trimethylolpropane triacrylate, trimethylolpropane ethoxytriacrylate, dipentaerythritolpentaacrylate, dipentaerythritolhexaacrylate and tris(2-hydroxyethyl)isocyanuratetriacrylate.

8. The method of claim 6, wherein the initiator comprises a photoinitiator and a thermal initiator, or a photo and thermal dual-responsive initiator.

9. The method of claim 6, wherein the electrolyte precursor composition has a viscosity of 20 cP or less.

10. The method of claim 6, wherein the amount of the photo-crosslinkable monomer is in a range of 1 wt% to 30 wt% based on the total weight of the electrolyte precursor composition.

11. The method of claim 6, wherein the thermal curing is carried out by storing the photocured electrode at 60°C to 90°C for 3 hours to 10 hours.

12. The method of claim 6, wherein the organic solvent has a boiling point which is higher than the temperature carrying out the thermal curing.

13. An all-solid battery comprising the solid electrolyte-electrode composite of claim 1.

[FIG. 1]

[FIG. 2]

[FIG. 3]

[FIG. 4]

[FIG. 5]

## INTERNATIONAL SEARCH REPORT

International application No.

**PCT/KR2023/012002**

### A. CLASSIFICATION OF SUBJECT MATTER

**H01M 10/0565**(2010.01)i; **H01M 10/42**(2006.01)i; **H01M 10/0585**(2010.01)i; **H01M 4/1391**(2010.01)i; **H01M 4/1393**(2010.01)i; **H01M 10/0525**(2010.01)i; **H01M 4/525**(2010.01)i; **H01M 4/505**(2010.01)i

According to International Patent Classification (IPC) or to both national classification and IPC

### B. FIELDS SEARCHED

Minimum documentation searched (classification system followed by classification symbols)

H01M 10/0565(2010.01); C08F 2/44(2006.01); C08F 20/20(2006.01); C08F 4/34(2006.01); H01M 10/052(2010.01); H01M 10/0562(2010.01); H01M 10/40(2006.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질 (solid electrolyte), 전극 (electrode), 전고체 (all-solid), 광경화 (UV curing), 열경화 (thermal curing), 개시제 (initiator)

### C. DOCUMENTS CONSIDERED TO BE RELEVANT

| Category* | Citation of document, with indication, where appropriate, of the relevant passages | Relevant to claim No. |
|---|---|---|
| X | JP 2000-230019 A (MITSUBISHI CHEMICALS CORP.) 22 August 2000 (2000-08-22) See abstract; and paragraphs [0027]-[0030], [0034]-[0035], [0038], [0041] and [0052]. | 1-5,13 |
| Y | | 6-12 |
| Y | KR 10-2320017 B1 (LG ENERGY SOLUTION, LTD.) 02 November 2021 (2021-11-02) See abstract; paragraphs [0094]-[0098] and [0140]; and claims 1 and 4. | 6-12 |
| A | KR 10-2013-0142224 A (ELECTRONICS AND TELECOMMUNICATIONS RESEARCH INSTITUTE et al.) 30 December 2013 (2013-12-30) See entire document. | 1-13 |
| A | KR 10-2020-0030975 A (GRINERGY CO., LTD.) 23 March 2020 (2020-03-23) See entire document. | 1-13 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 November 2023** | **21 November 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/012002** |

**C.  DOCUMENTS CONSIDERED TO BE RELEVANT**

| Category* | Citation of document, with indication, where appropriate, of the relevant passages | Relevant to claim No. |
| --- | --- | --- |
| A | JP 2002-216845 A (NIPPON SYNTHETIC CHEM. IND. CO., LTD.) 02 August 2002 (2002-08-02)<br>See entire document. | 1-13 |

**INTERNATIONAL SEARCH REPORT**
**Information on patent family members**

International application No.

**PCT/KR2023/012002**

| Patent document cited in search report | | | Publication date (day/month/year) | Patent family member(s) | | | Publication date (day/month/year) |
|---|---|---|---|---|---|---|---|
| JP | 2000-230019 | A | 22 August 2000 | JP | 4070359 | B2 | 02 April 2008 |
| KR | 10-2320017 | B1 | 02 November 2021 | CN | 111480256 | A | 31 July 2020 |
| | | | | CN | 111480256 | B | 10 October 2023 |
| | | | | EP | 3712999 | A1 | 23 September 2020 |
| | | | | JP | 2021-506063 | A | 18 February 2021 |
| | | | | JP | 7062205 | B2 | 06 May 2022 |
| | | | | KR | 10-2019-0122590 | A | 30 October 2019 |
| | | | | US | 11646442 | B2 | 09 May 2023 |
| | | | | US | 2020-0343577 | A1 | 29 October 2020 |
| | | | | WO | 2019-203622 | A1 | 24 October 2019 |
| KR | 10-2013-0142224 | A | 30 December 2013 | US | 2013-0337337 | A1 | 19 December 2013 |
| | | | | US | 2015-0221981 | A1 | 06 August 2015 |
| | | | | US | 9034522 | B2 | 19 May 2015 |
| | | | | US | 9306240 | B2 | 05 April 2016 |
| KR | 10-2020-0030975 | A | 23 March 2020 | KR | 10-2128041 | B1 | 29 June 2020 |
| JP | 2002-216845 | A | 02 August 2002 | None | | | |

Form PCT/ISA/210 (patent family annex) (July 2022)

**EP 4 571 916 A1**

**Patent documents cited in the description**

- KR 1020220101638

- KR 1020230105636